(19) Europäisches Patentamt
European Patent Office
Office européen des brevets

(11) Veröffentlichungsnummer: **0 260 227**
**B1**

(12) # EUROPÄISCHE PATENTSCHRIFT

(45) Veröffentlichungstag der Patentschrift: **16.01.91**

(51) Int. Cl.$^5$: **C 09 B 62/002,** D 06 P 1/38

(21) Anmeldenummer: **87810514.7**

(22) Anmeldetag: **07.09.87**

(54) **Reaktivfarbstoffe der Dioxazinreihe, deren Herstellung und Verwendung.**

(30) Priorität: **12.09.86 CH 3666/86**

(43) Veröffentlichungstag der Anmeldung:
**16.03.88 Patentblatt 88/11**

(45) Bekanntmachung des Hinweises auf die Patenterteilung:
**16.01.91 Patentblatt 91/03**

(84) Benannte Vertragsstaaten:
**BE CH DE FR GB IT LI**

(56) Entgegenhaltungen:
**EP-A-0 101 665**
**FR-A-2 297 232**

(73) Patentinhaber: **CIBA-GEIGY AG**
**Klybeckstrasse 141**
**CH-4002 Basel (CH)**

(72) Erfinder: **Seitz, Karl, Dr.**
**Schützenweg 9**
**CH-4104 Oberwil (CH)**

**EP 0 260 227 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die vorliegende Anmeldung betrifft neue verbesserte reaktive Dioxazinfarbstoffe, die sich besonders für das Färben von cellulosehaltigen Fasermaterialien nach dem Ausziehfärbeverfahren eignen, und die nass- und lichtechte Färbungen in reinen, leuchtend blauen Tönen ergeben, sowie Verfahren zur Herstellung dieser Farbstoffe, und deren Verwendung zum Färben und Bedrucken von textilen Materialien.

Es sind bereits z.B. aus der EP—A—0 101 665 symmetrische Dioxazinfarbstoffe enthaltend zwei faserreaktive Reste der Formel

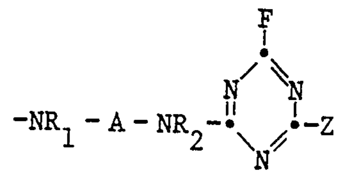

,

worin die Gruppe $—NR_1—A—NR_2—$ für den 1,3-Diaminopropylen-, 1,4-Diaminocyclohexylen- oder 1,4-Piperazindiylrest steht und Z Fluor oder einen gegebenenfalls substituierten Aminorest bedeutet, bekannt; diese vermögen jedoch nicht alle Wünsche bezüglich der Echtheiten zu erfüllen.

Gegenstand der Erfindung sind Reaktivfarbstoffe der Formel

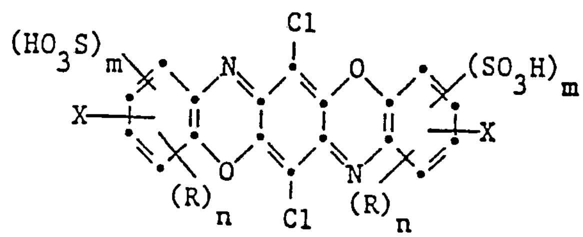

(1),

worin $(R)_n$ für n Substituenten R steht, die unabhängig voneinander $C_{1-4}$-Alkyl, $C_{1-4}$-Alkoxy, Halogen, Carboxy, Carbamoyl, N-$C_{1-4}$-Alkylcarbamoyl, N,N-Di-$C_{1-4}$-alkylcarbamoyl, $C_{1-4}$-Alkylsulfonyl, Sulfamoyl, N-$C_{1-4}$-Alkylsulfamoyl oder N,N-Di-$C_{1-4}$-alkylsulfamoyl sein können, n = 0 bis 2, m = 1 bis 2, ein X eine $H_2N$-Gruppe und das andere X ein Rest der Formel

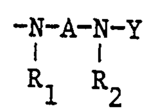

(2) ,

worin $R_1$ und $R_2$ unabhängig voneinander Wasserstoff oder gegebenenfalls substituiertes $C_{1-4}$-Alkyl, A $C_{2-4}$-Alkylen, das durch Halogen, Hydroxy, Carboxy, Sulfo, Phenyl, Sulfophenyl oder $C_{1-4}$-Alkoxycarbonyl substituiert sein kann, oder Cyclohexylen, das durch $C_{1-4}$-Alkyl substituiert sein kann, oder worin die Gruppe $—N(R_1)—A—N(R_2)—$1,4-Piperazindiyl ist, und Y ein Reaktivrest ist.

Mögliche Substituenten R sind z.B. Methyl, Aethyl, Propyl, Isopropyl, Butyl, Isobutyl, sec.-Butyl, tert.-Butyl, Methoxy, Aethoxy, Propyloxy, Isopropyloxy, Butyloxy, Isobutyloxy, sec.-Butyloxy, tert.-Butyloxy, Fluor, Chlor, Brom, Carboxy, Carbamoyl, N-Methylcarbamoyl, N-Aethylcarbamoyl, N,N-Dimethylcarbamoyl, N,N-Diäthylcarbamoyl, Methylsulfonyl, Aethylsulfonyl, Sulfamoyl, N-Methylsulfamoyl, N-Aethylsulfamoyl, N,N-Dimethylsulfamoyl und N,N-Diäthylsulfamoyl.

Als $C_{1-4}$-Alkyl kommt für $R_1$ und $R_2$ in Formel (2) ein geradkettiger oder verzweigter Alkylrest in Betracht, der auch substituiert sein kann, z.B. durch Halogen, Hydroxy, Cyan, Sulfo oder Sulfato. Als Beispiele seien genannt: Methyl, Aethyl, Propyl, Isopropyl, Butyl, Isobutyl, sek.-Butyl, tert.-Butyl, β-Chloräthyl, β-Hydroxyäthyl, β-Hydroxybutyl, β-Cyanäthyl, Sulfomethyl, β-Sulfoäthyl und β-Sulfatoäthyl.

Das Brückenglied A kann geradkettig oder verzweigt sein, und, wie oben angegeben, weitersubstituiert sein. Als Beispiele für A seien genannt: 1,2- und 1,3-Propylen, 2-Hydroxy-1,3-propylen, 1- und 2-Phenyl-1,3-propylen, 2-(4'-Sulfophenyl)-1,3-propylen, 1,4-, 2,3- und 2,4-Butylen, 2-Methyl-1,3-propylen, 1-Chloro-2,3-propylen, 2,3-Diphenyl-1,4-butylen, 1,3-Cyclohexylen, 1,4-Cyclohexylen, 4-Methyl-1,3-cyclohexylen, 2-Methyl-1,3-cyclohexylen, 5,5-Dimethyl-1,3-cyclohexylen, 2-Methyl-1,4-cyclohexylen, 4-6-Dimethyl-1,3-cyclohexylen, 4-Methyl-1,2-cyclohexylen und 1,4-Piperazindiyl.

Der Reaktivrest Y ist ein niedrigmolekularer, durch ein abspaltbares Atom oder eine abspaltbare Gruppe substituierter Alkanoyl- oder Alkylsulfonylrest, ein niedrigmolekularer, gegebenenfalls durch ein abspaltbares Atom oder eine abspaltbare Gruppe substituierter Alkenoyl- oder Alkensulfonylrest, ein über eine Carbonyl- oder Sulfonylgruppe, durch ein abspaltbares Atom oder eine abspaltbare Gruppe

substituierter carbo- oder heterocyclischer 4-, 5- oder 6-Ringe enthaltender Rest oder ein direkt über ein Kohlenstoffatom gebundener, durch ein abspaltbares Atom oder eine abspaltbare Gruppe substituierter Triazin- oder Pyrimidinrest, oder enthält einen solchen. Als Beispiele für derartige Reaktivreste seien genannt, ein Halogenatome enthaltender sechsgliedriger heterocyclischer Rest, wie ein Halogentriazin- oder Halogenpyrimidinrest, oder ein aliphatischer Acylrest, wie ein Halogenpropionyl- oder Halogenacryloylrest, oder ein β-Halogenäthyl-sulfonyl-, β-Sulfatoäthyl-sulfonyl- oder Vinylsulfonylrest. Der Reaktivrest Y ist vorzugsweise ein Halogentriazin- oder Halogenpyrimidinrest oder der Rest einer faserreaktiven Acylverbindung, der über die Carbonylgruppe an die —N($R_2$)-Gruppe gebunden ist, z.B. ein α,β-Dibrompropionylrest. Mit Y sind ferner auch Reaktivreste gemeint, die über ein Brückenglied, z.B. Alkylcarbonyl, an die —N($R_2$)-Gruppe gebunden sind. In manchen Fällen kann der Rest Y einen Substituenten tragen, der selbst einen faserreaktiven Rest enthält. Hierfür kommen vor allem Halogentriazinreste in Betracht, an die ein Vinylsulfonylrest oder eine äquivalente Gruppe, z.B. β-Chloräthyl-sulfonyl, über ein aliphatisches, aromatisches gemischt aliphatisch-aromatisches oder heterocyclisches Brückenglied gebunden ist. Als Beispiele für bevorzugte Reste mit Brückenglied, welche für Y stehen können seien die folgenden genannt:

$$—COCH_2CH_2CH_2SO_2CH_2CH_2Cl$$

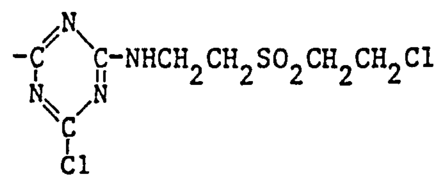

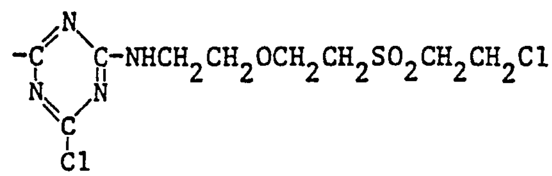

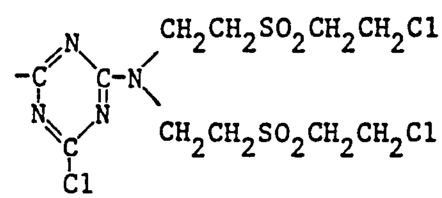

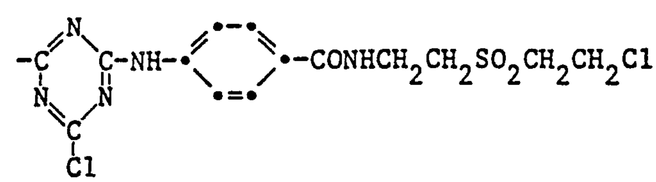

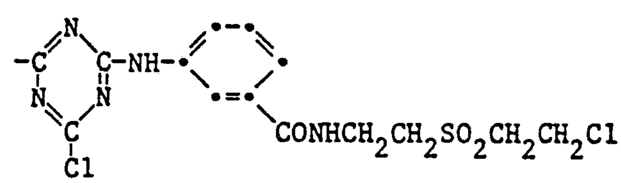

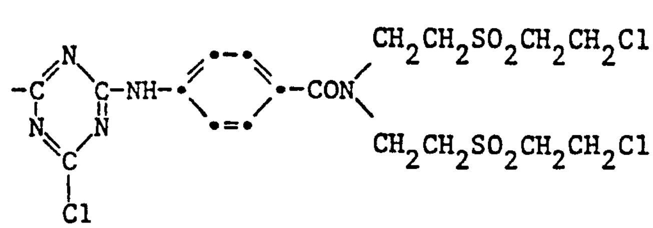

sowie die entsprechenden Fluortriazinreste. Als Reaktivreste Y sind ferner bevorzugt Chlortriazin- oder

Fluortriazinreste, welche einen nichtfaserreaktiven Substituenten enthalten, z.B. —$NH_2$, β-Sulfoäthylamino, β-Hydroxyäthylamino, N,N-Di-β-hydroxyäthylamino, Phenylamino, N-Aethyl-N-phenylamino, m-Sulfophenylamino, p-Sulfophenylamino, Morpholino, Methoxy, Isopropoxy oder dergl.; und Halogenpyrimidinreste, beispielsweise der 2,4-Difluorpyrimidyl-(6)-Rest und der 2,4-Difluor-5-chlorpyrimidyl-(6)-Rest.

Unter den Reaktivfarbstoffen der Formel (1) sind diejenigen bevorzugt,

a) worin n = 0 ist;

b) worin m = 1 ist;

c) welche der Formel

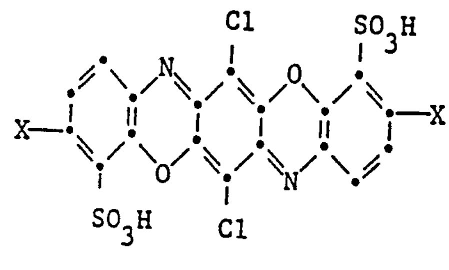

(3)

entsprechen, worin X die unter Formel 1 angegebene Bedeutung hat;

d) worin $R_1$ und $R_2$ Wasserstoff sind;

e) worin A Propylen ist, das durch Chlor, Hydroxy, Methyl oder Phenyl substituiert sein kann;

f) worin A 1,2-Propylen, 1,3-Propylen, 2-Hydroxy-1,3-propylen, 1-Phenyl-1,3-propylen, 2-Phenyl-1,3-propylen, 2-(4'-Sulfophenyl)-1,3-propylen oder 2-Methyl-1,3-propylen ist;

g) worin A 1,2-Propylen, 1,3-Propylen oder 2-Methyl-1,3-propylen ist;

h) worin A 1,3-Propylen ist;

i) worin ein X ein Rest der Formel

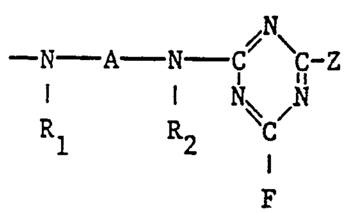

(4)

und Z —$NH_2$ oder eine substitutierte Aminogruppe ist.

Als substituierte Aminogruppen Z kommen in Betracht: Alkylamino-, N,N-Dialkylamino-, Cycloalkylamino-, N,N-Dicycloalkylamino-, Aralkylamino-, Arylaminogruppen, gemischt substituierte Aminogruppen, wie N-Alkyl-N-cyclohexylamino- und N-Alkyl-N-arylaminogruppen, ferner Aminogruppen, die heterocyclische Reste enthalten, welche weitere ankondensierte carbocyclische Ringe aufweisen können, sowie Aminogruppen, worin das Aminostickstoffatom Glied eines N-heterocyclischen Ringes ist, der gegebenenfalls weitere Heteroatome enthält. Die oben genannten Alkylreste können geradkettig oder verzweigt, niedrigmolekular oder höhermolekular sein, bevorzugt sind Alkylreste mit 1 bis 6 Kohlenstoffatomen; als Cycloalkyl-, Aralkyl- und Arylreste kommen insbesondere Cyclohexyl-, Benzyl-, Phenäthyl-, Phenyl- und Naphthylreste in Frage; heterocyclische Reste sind vor allem Furan-, Thiophen-, Pyrazol-, Pyridin-, Pyrimidin-, Chinolin-, Benzimidazol-, Benzthiazol- und Benzoxazolreste; und als Aminogruppen, worin das Aminostickstoffatom Glied eines N-heterocyclischen Ringes ist, kommen vorzugsweise Reste von sechs-gliedrigen N-heterocyclischen Verbindungen in Betracht, die als weitere Heteroatome Stickstoff, Sauerstoff und Schwefel enthalten können. Die oben genannten Alkyl-, Cycloalkyl-, Aralkyl- und Arylreste, die heterocyclischen Reste sowie die N-heterocyclischen Ringe können weitersubstituiert sein, z.B. durch: Halogen, wei Fluor, Chlor und Brom, Nitro, Cyan, Trifluormethyl, Sulfamoyl, Carbamoyl, $C_{1-4}$-Alkyl, $C_{1-4}$-Alkoxy, Acylaminogruppen, wie Acetylamino, Ureido, Hydroxy, Carboxy, Sulfomethyl und Sulfo.

Als Beispiele für den Aminorest Z in Formel (4) seien genannt: —$NH_2$, Methylamino, Aethylamino, Propylamino, Isopropylamino, Butylamino, Hexylamino, β-Methoxyäthylamino, γ-Methoxypropylamino, β-Aethoxyäthylamino, N,N-Dimethylamino, N,N-Diäthylamino, β-Chloräthylamino, β-Cyanäthylamino, γ-Cyanpropylamino, β-Carboxyäthylamino, Sulfomethylamino, β-Sulfoäthylamino, β-Hydroxyäthylamino, N,N-Di-β-hydroxyäthylamino, γ-Hydroxypropylamino, Benzylamino, Phenäthylamino, Cyclohexylamino, N-Methyl-N-phenylamino, N-Aethyl-N-phenylamino, N-Propyl-N-phenylamino, N-Butyl-N-phenylamino, N-β-Cyanäthyl-N-phenylamino, N-Aethyl-2-methylphenylamino, N-Aethyl-4-methylphenylamino, N-Aethyl-3-sulfophenylamino, N-Aethyl-4-sulfophenylamino, Phenylamino, Toluidino, Xylidino, Chloranilino,

Anisidino, Phenetidino, 2-, 3- und 4-Sulfoanilino, 2,5-Disulfoanilino, Sulfomethylanilino, N-Sulfomethylanilino, 3- und 4-Carboxyphenylamino, 2-Carboxy-5-sulfophenylamino, 2-Carboxy-4-sulfophenylamino, 4-Sulfonaphthyl-(1)-amino, 3,6-Disulfonaphthyl-(1)-amino, 3,6,8-Trisulfonaphthyl-(1)-amino, 4,6,8-Trisulfonaphthyl-(1)-amino, 6-Sulfonaphthyl-(2)-amino, Pyridyl-(2)-amino, Morpholino, Piperidino und Piperazino.

Bevorzugt sind ferner Reaktivfarbstoffe,

i) worin Z in Formel (4) —$NH_2$, $C_{1-4}$-Alkylamino, das durch Hydroxy oder Sulfo substituiert sein kann, N,N-Di-$C_{1-4}$-alkylamino, das durch Hydroxy substituiert sein kann, Phenylamino, das durch $C_{1-4}$-Alkyl, $C_{1-4}$-Alkoxy, Halogen, Hydroxy, Ureido, Acetylamino, Carboxy, Sulfo oder Sulfomethyl substituiert sein kann, N-$C_{1-4}$-Alkyl-N-phenylamino, Sulfonaphthylamino oder Morpholino ist;

k) worin Z ein Rest der Formel

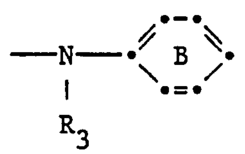

(5)

und $R_3$ Wasserstoff oder $C_{1-4}$-Alkyl, das durch Halogen, Cyan, Hydroxy, Carboxy, Sulfo oder Sulfato substituiert sein kann, ist, und der Phenylring B durch Methyl, Methoxy, Aethoxy, Chlor, Hydroxy, Ureido, Acetylamino, Carboxy oder Sulfo substituiert sein kann;

l) worin $R_3$ Wasserstoff ist, und der Benzolring B durch Sulfo oder Methyl substituiert sein kann;

m) worin Z 2-Methyl-5-sulfophenylamino oder 2,5-Disulfophenylamino ist.

Durch Kombination obiger Merkmale, z.B. g) und l) oder c), h) und k), ergeben sich weitere bevorzugte Untergruppen von Reaktivfarbstoffen der Formel (1).

Besonders bevorzugt ist

n) der Reaktivfarbstoff der Formel

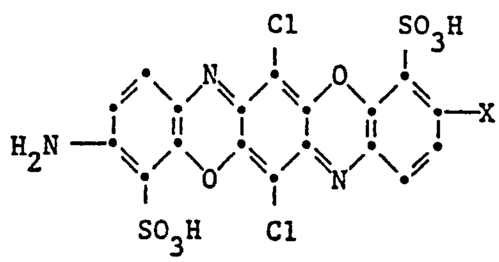

(6)

worin X ein Rest der Formel

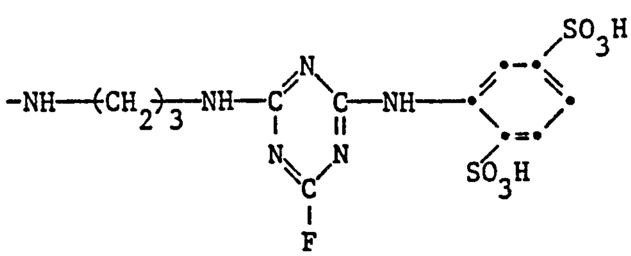

(7)

ist.

Die Herstellung der Reaktivfarbstoffe der Formel (1) ist dadurch gekennzeichnet, dass man Dioxazinverbindungen der Formel

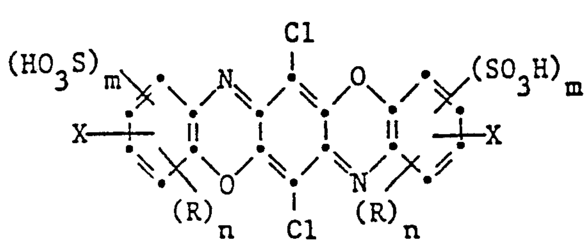

(1)

worin R, n und m die unter Formel (1) angegebenen Bedeutungen haben, ein X eine $H_2N$-Gruppe und das andere X ein Rest der Formel

$$-\underset{\displaystyle R_1}{\underset{|}{N}}-A-\underset{\displaystyle R_2}{\underset{|}{NH}} \qquad (8)$$

ist, mit einer Reaktivkomponente der Formel

$$\text{Halogen-Y} \qquad (9)$$

kondensiert.

Falls der Reaktivrest Y ein Halogentriazinrest ist, kann durch vorhergehende oder nachträgliche Kondensation mit einer Amino-, Hydroxy- oder Mercaptoverbindung ein Halogenatom am Triazinring gegen einen Amino-, Alkoxy-, Aryloxy-, Alkylthio oder Arylthiorest ausgetauscht werden. Als Beispiele für derartige Amino-, Hydroxy- und Mercaptoverbindungen seien die folgenden genannt: Ammoniak, Methylamin, Dimethylamin, Aethylamin, Diäthylamin, Propylamin, Isopropylamin, Butylamin, Dibutylamin, Isobutylamin, sek.-Butylamin, tert.-Butylamin, Hexylamin, Methoxyäthylamin, Aethoxyäthylamin, Methoxypropylamin, Chloräthylamin, Hydroxyäthylamin, Dihydroxyäthylamin, Hydroxypropylamin, Aminoäthansulfonsäure, β-Sulfatoäthylamin, Benzylamin, Phenäthylamin, Cyclohexylamin, N-Methylaminobenzol, N-Aethylaminobenzol, N-Propylaminobenzol, N-Isopropylaminobenzol, N-Butylaminobenzol, N-Isobutylaminobenzol, N-sek.-Butylaminobenzol, N-Hexylaminobenzol, N-β-Hydroxyäthylaminobenzol, N-β-Chloräthylaminobenzol, N-β-Cyanäthylaminobenzol, N-β-Sulfoäthylaminobenzol, 1-(N-Aethylamino)-2-3- oder -4-methylbenzol, 1-(N-Aethylamino)-2-, -3- oder -4-äthylbenzol, 1-(N-Aethylamino)-2-, -3- oder -4-chlorbenzol, 1-N-Aethylaminobenzol-3- oder -4-sulfonsäure, 1-(N-Aethylamino)-4-butylbenzol, 1-(N-Aethylamino)-4-hexylbenzol, 1-(N-Aethylamino)-4-octylbenzol, 1-(N-Aethylamino)-4-vinylbenzol, 1-N-n-Butylamino-3-methylbenzol, 1-(N-Aethylamino)-4-fluorbenzol, Anilin, o-, m- und p-Toluidin, 2,3-, 2,4-, 2,5-, 2,6-, 3,4- und 3,5-Dimethylanilin, o-, m- und p-Chloranilin, N-Methylanilin, N-Aethylanilin, 3- oder 4-Acetylaminoanilin, 2,5-Dimethoxyanilin, o-, m- und p-Anisidin, o-, m- und p-Phenetidin, 2-Methoxy-5-methylanilin, 2-Aethoxy-5-methoxyanilin, 4-Bromanilin, 3-Aminobenzamid, 4-Aminophenylsulfamid, 3-Trilfluormethylanilin, 3- und 4-Aminophenylsulfamid, 3-Trifluormethylanilin, 3- und 4-Aminophenylharnstoff, 1-Naphthylamin, 2-Naphthylamin, Orthanilsäure, Metanilsäure, Sulfanilsäure, Anilin-2,4-disulfonsäure, Anilin-2,5-disulfonsäure, Anilin-3,5-disulfonsäure, Anthranilsäure, m- und p-Aminobenzoesäure, 4-Aminophenylmethansulfonsäure, Anilin-N-methansulfonsäure, 2-Aminotoluol-4-sulfonsäure, 2-Aminotoluol-5-sulfonsäure, p-Aminosalicylsäure, 1-Amino-4-carboxy-benzol-3-sulfonsäure, 1-Amino-2-carboxy-benzol-5-sulfonsäure, 1-Amino-5-carboxy-benzol-2-sulfonsäure, 1-Naphthylamin-2-, -3-, -4-, -5-, -6-, -7- und -8-sulfonsäure, 2-Naphthylamino-1-, -3-, -4-, -5-, -6-, -7- und -8-sulfonsäure, 1-Naphthylamin-2,4-, -2,5-, -2,7-, -2,8-, -3,5-, -3,6-, -3,7-, -3,8-, -4,6-, -4,7-, -4,8- und -5,8-disulfonsäure, 2-Naphthylamin-1,5-, -1,6-, -1,7-, -3,6-, -3,7-, -4,7-, -4,8-, -5,7- und -6,8-disulfonsäure, 1-Naphthylamin-2,4,6-, -2,4,7-, -2,5,7-, -3,5,7-, -3,6,8- und -4,6,8-trisulfonsäure, 2-Naphthylamin-1,3,7-, -1,5,7-, -3,5,7-, -3,6,7-, -3,6,8- und -4,6,8-trisulfonsäure, 2-, 3- und 4-Aminopyridin, 2-Aminobenzthiazol, 5-, 6- und 8-Aminochinolin, 2-Aminopyrimidin, Morpholin, Piperidin, Piperazin, Wasser, Methanol, Aethanol, Propanol, Isopropanol, n-Butanol, Isobutanol, sek.-Butanol, tert.-Butanol, Hexanol, Cyclohexanol, β-Methoxyäthanol, β-Aethoxyäthanol, γ-Methoxypropanol, γ-Aethoxypropanol, β-Aethoxy-β-äthoxyäthanol, Glycolsäure, Phenol, o-, m- und p-Chlorphenol, Methanthiol, Aethanthiol, Propanthiol, Isopropanthiol, n-Butanthiol, Thioglycolsäure, Thioharnstoff, Thiophenol, α-Thionaphthol, β-Thionaphthol.

Bei der Herstellung derartiger Triazinfarbstoffe können die einzelnen Verfahrensschritte in unterschiedlicher Reihenfolge, gegebenenfalls teilweise auch gleichzeitig, ausgeführt werden. Dabei sind verschiedene Verfahrensvarianten möglich. Im allgemeinen führt man die Umsetzung schrittweise nacheinander aus.

Dabei hängt es von der Struktur der Ausgangsstoffe ab, welche der möglichen Verfahrensvarianten die besten Resultate ergeben, oder unter welchen speziellen Bedingungen, z.B. bei welcher Kondensationstemperatur, die Reaktion am vorteilhaftesten auszuführen ist.

Wichtige Verfahrensvarianten sind dadurch gekennzeichnet, dass man:

1. Eine Dioxazinverbindung der Formel (1), worin ein X ein Rest der Formel (8) ist, mit einem 2,4,6-Trihalogen-3-triazin kondensiert und das erhaltene Kondensationsprodukt mit 1 Mol eines Amins kondensiert.

2. 2,4,6-Trihalogen-s-triazin mit einem Amin monokondensiert, und die erhaltene Zwischenverbindung im molaren Verhältnis 1:1 mit einer Dioxazinverbindung der Formel (1), worin X ein Rest der Formel (8) ist, kondensiert.

Die Kondensation der Halogentriazine mit den genannten Amino-, Hydroxy- oder Mercaptoverbindungen erfolgt in an sich bekannter Weise, vorzugsweise in Gegenwart von alkalischen Mitteln.

Die bevorzugte Herstellungsweise des Reaktivfarbstoffes gemäss n) ist dadurch gekennzeichnet, dass man eine Dioxazinverbindung der Formel

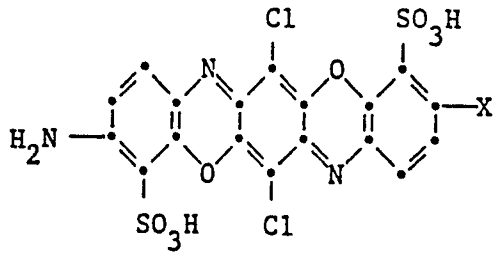

(6)

worin X ein Rest der Formel

$$-NH-(CH_2)_3-NH_2 \quad (10)$$

ist, mit der durch Monokondensation von 2,4,6-Trifluor-s-triazin und Anilin-2,5-disulfonsäure erhaltenen Verbindung der Formel

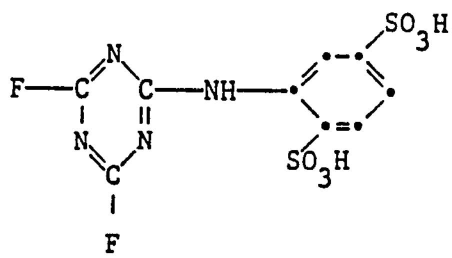

(11)

kondensiert.

Die Kondensation des 2,4,6-Trifluor-s-triazins mit den Dioxazinverbindungen der Formel (1) erfolgt vorzugsweise in wässriger Lösung oder Suspension, bei niedrigen Temperaturen, vorzugsweise zwischen 0° und 5°C und bei schwach saurem, neutralem bis schwach alkalischem pH-Wert. Vorteilhaft wird der bei der Kondensation freiwerdende Fluorwasserstoff laufend durch Zugabe wässriger Alkalihydroxide, -carbonate oder -bicarbonate neutralisiert. Für die weitere Umsetzung der so erhaltenen Fluortriazinfarbstoffe bzw. für die Umsetzung des 2,4,6-Trifluor-s-triazins mit Aminen setzt man die freien Amine oder deren Salze, bevorzugt in Form des Hydrochlorids, ein. Die Umsetzung wird bei Temperaturen etwa zwischen 0 und 40°C, bevorzugt zwischen 5 und 25°C, unter Zusatz säurebindender Mittel, bevorzugt Natriumcarbonat, in einem pH-Bereich von 2 bis 8, bevorzugt 5 bis 6,5, durchgeführt.

Die Kondensation des Fluortriazins mit einem Amin kann vor oder nach der Kondensation des Fluortriazins mit einem Dioxazin der Formel (1) geschehen. Die Kondensation des Fluortriazins mit einem Amin erfolgt vorzugsweise in wässriger Lösung oder Suspension, bei niedriger Temperatur und bei schwach saurem bis neutralem pH-Wert. Auch hier wird der bei der Kondensation freiwerdende Fluorwasserstoff vorteilhafterweise durch laufende Zugabe von wässrigen Alkalihydroxiden, -carbonaten oder -bicarbonaten neutralisiert.

Die als Ausgangsstoffe verwendeten Dioxazinverbindungen der Formel (1), worin ein X eine $H_2N$-Gruppe und das andere X ein Rest der Formel (8) ist, werden in üblicher Weise durch Ringschluss aus dem Anil der Formel

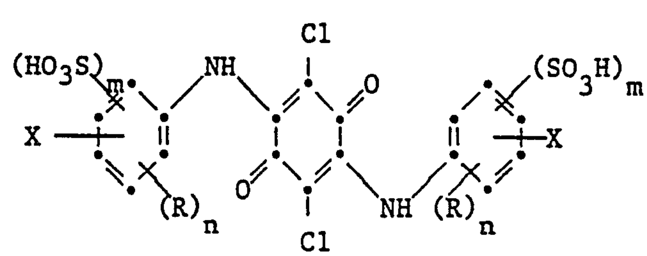

(12)

hergestellt.

Die Reaktivfarbstoffe der Formel (1) können isoliert und zu brauchbaren, trockenen Färbepräparaten

verarbeitet werden. Die Isolierung erfolgt vorzugsweise bei möglichst niedrigen Temperaturen durch Aussalzen und Filtrieren. Die filtrierten Farbstoffe können gegebenenfalls nach Zugabe von Coupagemitteln und/oder Puffermitteln, z.B. nach Zugabe eines Gemisches gleicher Teile Mono- und Dinatriumphosphat, getrocknet werden; vorzugsweise wird die Trocknung bei nicht zu hohen Temperaturen und unter vermindertem Druck vorgenommen. Durch Zerstäubungstrocknung des ganzen Herstellungsgemisches kann man in gewissen Fällen die erfindungsgemässen trockenen Präparate direkt, d.h. ohne Zwischenisolierung der Farbstoffe herstellen.

Der Reaktivrest Y enthält einen Substituenten, der eine faserreaktive Abgangsgruppe ist, bzw. enthält, oder die nach Art von faserreaktiven Abgangsgruppen wirksam werden können. Unter faserreaktiven Verbindungen sind solche zu verstehen, die mit den Hydroxygruppen der Cellulose, den Amino-, Carboxy-, Hydroxy- und Thiolgruppen bei Wolle und Seide, oder mit den Amino- und evtl. Carboxygruppen von synthetischen Polyamiden unter Bildung kovalenter chemischer Bindung zu reagieren vermögen.

Die Reaktivfarbstoffe der Formel (1) eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürliche Cellulosefaser, wie Baumwolle, Leinen und Hanf, sowie Zellstoff und regenerierte Cellulose. Die Reaktivfarbstoffe der Formel (1) sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten.

Sie eignen sich sowohl für das Ausziehverfahren als auch zum Färben nach dem Foulardfärbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Besonders geeignet sind sie für das sogenannte Kaltverweilverfahren, wonach der Farbstoff zusammen mit dem Alkali auf dem Foulard aufgebracht wird und danach durch mehrstündiges Lagern bei Raumtemperatur fixiert wird. Nach dem Fixieren werden die Färbungen und Drucke mit kaltem und heissem Wasser, gegebenenfalls unter Zusatz eines dispergierend wirkenden und die Diffusion der nicht fixierten Anteile fördernden Mittels gründlich gespült.

Die Reaktivfarbstoffe der Formel (1) zeichnen sich durch hohe Reaktivität und gutes Fixiervermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist. Die Reaktivfarbstoffe der Formel (1) eignen sich auch zum Druck, vor allem auf Baumwolle, ebenso aber auch zum Bedrucken von stickstoffhaltigen Fasern, z.B. von Wolle, Seide oder Wolle enthaltenden Mischgeweben.

Die mit den erfindungsgemässen Farbstoffen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter. Die Herstellung der Zwischenverbindung ist in den nachfolgenden Ausführungsbeispielen nicht in allen Fällen beschrieben, sie ergibt sich jedoch ohne weiteres aus der allgemeinen Beschreibung.

## Beispiel 1

18 Teile des Chromophors der Formel

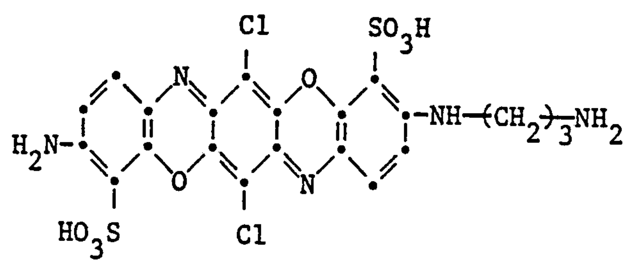

werden in 200 Teilen Wasser angerührt und mit Natronlauge auf pH 8 gestellt. Die erhaltene Suspension wird hierauf mit 200 Teilen einer neutralen wässerigen Lösung versetzt, die 12,03 Teile des primären

Kondensationsproduktes aus Cyanurchlorid und Anilin-2,5-disulfonsäure enthält. Man kondensiert bei Raumtemperatur und hält das pH mit 1-n Natronlauge bei ca. 8. Nach vollständiger Acylierung der aliphatischen Aminogruppe wird der Farbstoff mit Kochsalz isoliert, abfiltriert, und im Vakuum getrocknet.

Der so erhaltene Farbstoff besitzt die Formel

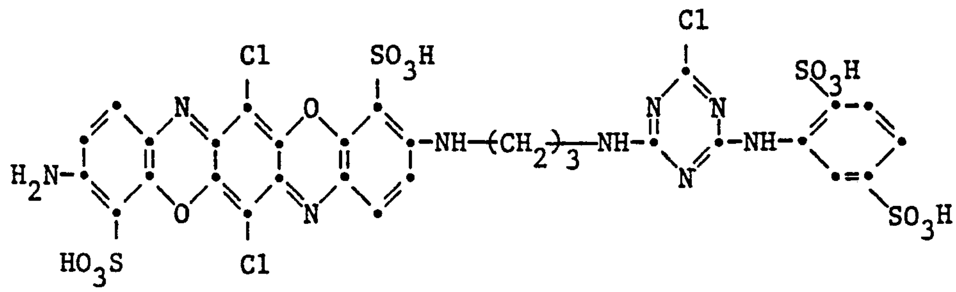

und färbt ein reines Blau $\alpha_{max}$ 616 nm).

Aehnliche Farbstoffe werden erhalten, wenn zur Acylierung der aliphatischen Aminogruppe des obigen Chromophors entsprechende Mengen der folgenden Acylierungsmittel verwendet werden:

$\lambda_{max}$:

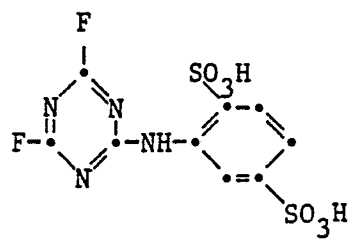

612 nm

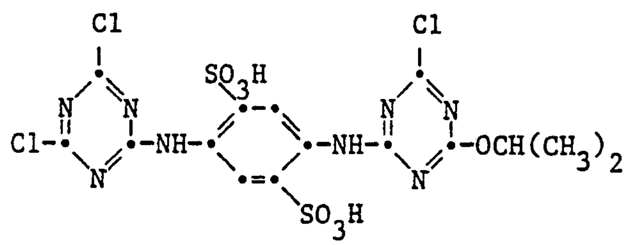

616 nm

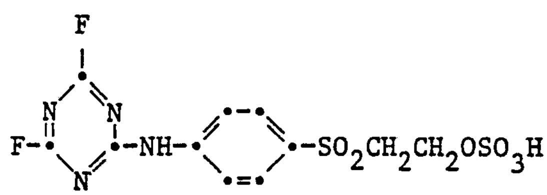

616 nm

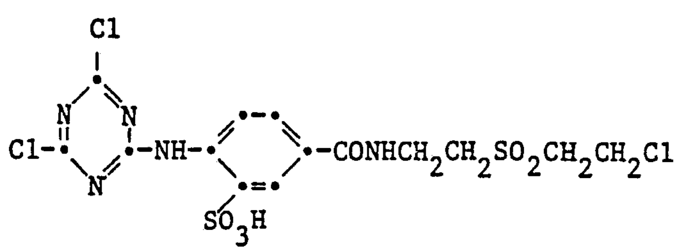

608 nm

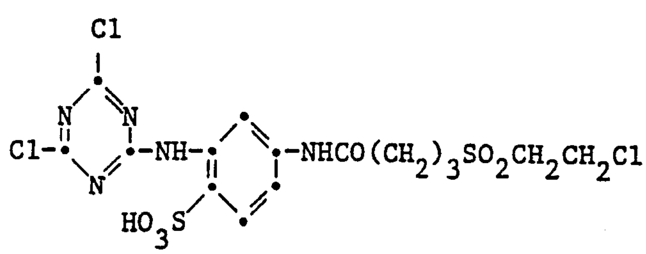

616 nm

Verwendet man in Beispiel 1 anstelle von Anilin-2,5-disulfonsäure eine äquivalente Menge der 2-Methyl-anilin-5-sulfonsäure, so erhält man einen ähnlichen Farbstoff.

Weitere Farbstoffe werden erhalten, wenn anstelle von Anilin-2,5-disulfonsäure äquivalente Mengen der unten aufgeführten Amine verwendet werden.

| Beispiel | Amine |
|---|---|
| 2 | Ammoniak |
| 3 | Methylamin |
| 4 | Aetanolamin |
| 5 | Diäthanolamin |
| 6 | Taurin |
| 7 | n-Butylamin |
| 8 | Anilin |
| 9 | N-Methylanilin |
| 10 | N-Aethylanilin |
| 11 | m-Toluidin |
| 12 | p-Toluidin |
| 13 | m-Chloranilin |
| 14 | p-Chloranilin |
| 15 | o-Anisidin |
| 16 | p-Anisidin |
| 17 | p-Phenetidin |
| 18 | p-Aminobenzoesäure |
| 19 | Anilin-3-sulfonsäure |
| 20 | 4-Aminoacetanilid |
| 21 | 3-Aminophenylharnstoff |
| 22 | 4-Aminophenylharnstoff |
| 23 | Diäthylamin |
| 24 | Morpholin |
| 25 | 2-Naphthylamin-6-sulfonsäure |
| 26 | 4-Aminosalicylsäure |
| 27 | Anilin-2,4-disulfonsäure |
| 28 | 1-Naphthylamin-4-sulfonsäure |
| 29 | 1-Naphthylamin-5-sulfonsäure |
| 30 | 2-Naphthylamin-6,8-disulfonsäure |
| 31 | 2-Naphthylamin-4,8-disulfonsäure |
| 32 | 2-Naphthylamin-5,7-disulfonsäure |
| 33 | 2-Naphthylamin-6,8-disulfonsäure |
| 34 | 1-Naphthylamin-3,6-disulfonsäure |
| 35 | 1-Naphthylamin-4,6-disulfonsäure |
| 36 | 2-Naphthylamin-3,6,8-trisulfonsäure |

## Beispiel 37

Ersetzt man in Beispiel 1 den dort verwendeten Chromophor durch eine entsprechende Menge der 2,9-Dichlorverbindung und verfährt im übrigen nach den Angaben von Beispiel 1, so erhält man einen Farbstoff der Formel

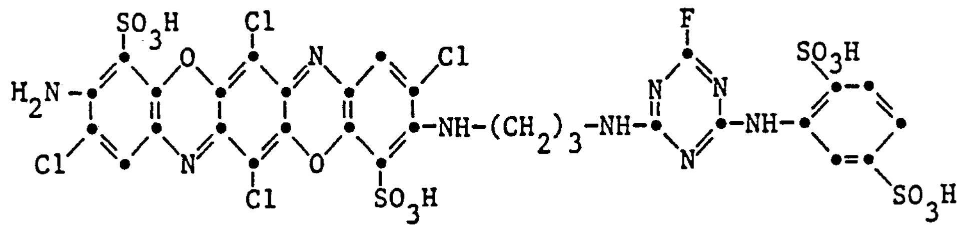

der Baumwolle in rotstichig blauen Tönen färbt.

Beispiel 38

Ersetzt man in Beispiel 1 das 1,3-Diamino-propan-Brückenglied durch 1,4-Diaminocyclohexan und verfahrt im übrigen nach den Angaben von Beispiel 1, so erhält man einen Farbstoff der mutmasslichen Formel

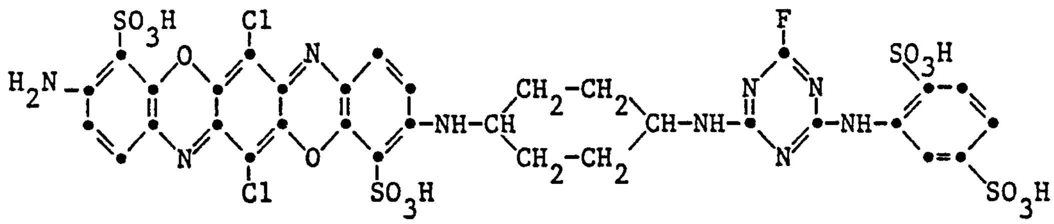

der Baumwolle in blauen Tönen färbt.

Beispiel 39

Ersetzt man in Beispiel 1 das 1,3-Diamino-propan-Brückenglied durch Piperazin und verfährt im übrigen nach den Angaben von Beispiel 1, so erhält man einen Farbstoff der mutmasslichen Formel

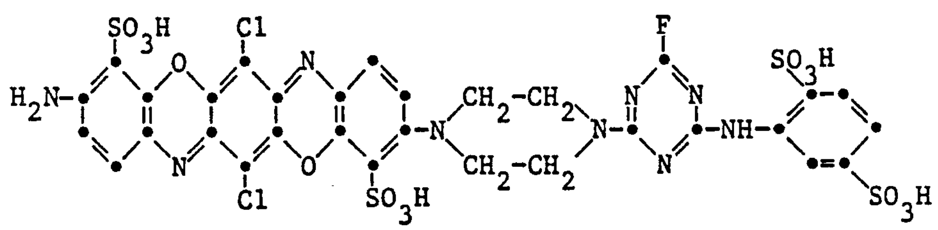

.

Färbevorschrift 1

2 Teile des gemäss Beispiel 1 erhaltenen Farbstoffes werden unter Zusatz von 5 bis 20 Teilen Harnstoff und 2 Teilen kalzinierter Soda in 100 Teilen Wasser bei 20 bis 50°C gelöst. Mit der erhaltenen Lösung wird ein Baumwollgewebe imprägniert, sodass es um 60 bis 80% seines Gewichtes zunimmt, und dann getrocknet. Danach wird während ½ bis 5 Minuten bei 140 bis 210° thermofixiert, dann während einer Viertelstunde in einer 0,1 %igen kochenden Lösung eines ionenfreien Waschmittels geseift, gespült und getrocknet.

Färbevorschrift 2

2 Teile des gemäss Beispiel 1 erhaltenen Farbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, sodass es um 75% seines Gewichtes zunimmt, und dann getrocknet.

Danach imprägniert man das Gewebe mit einer 20° warmen Lösung, die pro Liter 5 Gramm Natriumhydroxyd und 300 Gramm Natriumchlorid enthält, quetscht auf 75% Gewichtszunahme ab, dämpft die Färbung während 30 Sekunden bei 100 bis 101°, spült, seift während einer Viertelstunde in einer 0,3 %igen kochenden Lösung eines ionenfreien Waschmittels, spült und trocknet.

Färbevorschrift 3

2 Teile des gemäss Beispiel 1 erhältlichen Farbstoffes werden in 100 Teilen Wasser gelöst.

Die Lösung gibt man zu 1900 Teilen kaltem Wasser, fügt 60 Teile Natriumchlorid zu und geht mit 100 Teilen eines Baumwollgewebes in dieses Färbebad ein.

Man steigert die Temperatur auf 60°, wobei nach 30 Minuten 40 Teile kalzinierte Soda und nochmals 60

Teile Natriumchlorid zugegeben werden. Man hält die Temperatur 30 Minuten auf 60°, spült und seift dann die Färbung während 15 Minuten in einer 0,3 %igen kochenden Lösung eines ionenfreien Waschmittels, spült und trocknet.

Färbevorschrift 4

4 Teile des in Beispiel 1 hergestellten Reaktivfarbstoffes werden in 50 Teilen Wasser gelöst. Dazu gibt man 50 Teile einer Lösung, die pro Liter 5 g Natriumhydroxyd und 10 g kalziniertes Soda enthält. Mit der erhaltenen Lösung wird ein Baumwollgewebe foulardiert, so dass es um 70% seines Gewichtes zunimmt, und dann auf eine Kaule aufgewickelt. Das Baumwollgewebe wird so während 3 bis 12 Stunden bei Raumtemperatur gelagert. Danach wird die gefärbte Ware gespült, während einer Viertelstunde mit einem nichtionogenen Waschmittel kochend geseift, nochmals gespült und getrocknet. Man erhält eine blaue Färbung mit guten Echtheitseigenschaften.

## Patentansprüche

1. Reaktivfarbstoffe der Formel

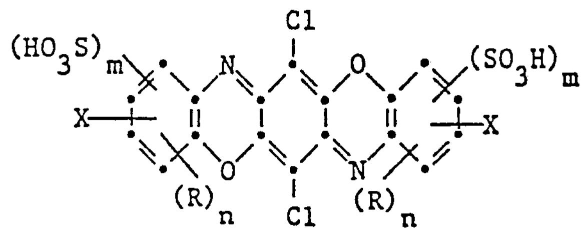

(1)

worin $(R)_n$ für n Substituenten R steht, die unabhängig voneinander $C_{1-4}$-Alkyl, $C_{1-4}$-Alkoxy, Halogen, Carboxy, Carbamoyl, N-$C_{1-4}$-Alkylcarbamoyl, N,N-Di-$C_{1-4}$-alkylcarbamoyl, $C_{1-4}$-Alkylsulfonyl, Sulfamoyl, N-$C_{1-4}$-Alkylsulfamoyl oder N,N-Di-$C_{1-4}$-Alkylsulfamoyl sein können, n = 0 bis 2, m = 1 bis 2, ein X eine $H_2N$-Gruppe und das andere X ein Rest der Formel

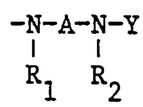

(2)

worin $R_1$ und $R_2$ unabhängig voneinander Wasserstoff oder gegebenenfalls substituiertes $C_{1-4}$-Alkyl, A $C_{2-4}$-Alkylen, das durch Halogen, Hydroxy, Carboxy, Sulfo, Phenyl, Sulfophenyl oder $C_{1-4}$-Alkoxycarbonyl substituiert sein kann, oder Cyclohexylen, das durch $C_{1-4}$-Alkyl substituiert sein kann, oder worin die Gruppe $-N(R_1)-A-N(R_2)$-1,4-Piperazindiyl ist, und Y ein Reaktivrest ist.

2. Reaktivfarbstoffe gemäss Anspruch 1, worin n = 0 ist.

3. Reaktivfarbstoffe gemäss Anspruch 1 oder 2, worin m = 1 ist.

4. Reaktivfarbstoffe gemäss den Ansprüchen 1, 2 und 3, der Formel

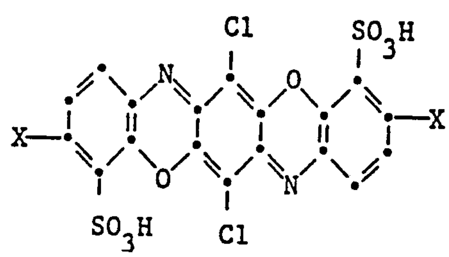

(3)

worin X die im Anspruch 1 angegebene Bedeutung hat.

5. Reaktivfarbstoffe gemäss einem der Ansprüche 1 bis 4, worin $R_1$ und $R_2$ Wasserstoff sind.

6. Reaktivfarbstoffe gemäss einem der Ansprüche 1 bis 5, worin A Propylen ist, das durch Chlor, Hydroxy, Methyl oder Phenyl substituiert sein kann.

7. Reaktivfarbstoffe gemäss Anspruch 6, worin A 1,2-Propylen, 1,3-Propylen, 2-Hydroxy-1,3-propylen, 1-Phenyl-1,3-propylen, 2-Phenyl-1,3-propylen, 2-(4'-Sulfophenyl)-1,3-propylen oder 2-Methyl-1,3-propylen ist.

8. Reaktivfarbstoffe gemäss Anspruch 7, worin A 1,2-Propylen, 1,3-Propylen oder 2-Methyl-1,3-Propylen ist.

9. Reaktivfarbstoffe gemäss Anspruch 8, worin A 1,3-Propylen ist.

10. Reaktivfarbstoffe gemäss einem der Ansprüche 1 bis 9, worin ein X ein Rest der Formel

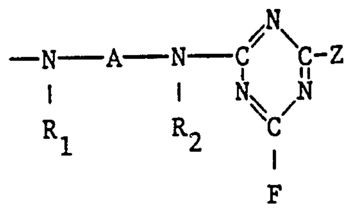

(4)

und Z —$NH_2$ oder eine substituierte Aminogruppe ist.

11. Reaktivfarbstoffe gemäss Anspruch 10, worin Z —$NH_2$ $C_{1-4}$-Alkylamino, das durch Hydroxy oder Sulfo substituiert sein kann N,N-Di-$C_{1-4}$-alkylamino, das durch Hydroxy substituiert sein kann, Phenylamino, das durch $C_{1-4}$-Alkyl, $C_{1-4}$-Alkoxy, Halogen, Hydroxy, Ureido, Acetylamino, Carboxy, Sulfo oder Sulfomethyl substituiert sein kann, N-$C_{1-4}$-Alkyl-N-phenylamino, Sulfonaphthylamino oder Morpholino ist.

12. Reaktivfarbstoffe gemäss Anspruch 11, worin Z ein Rest der Formel

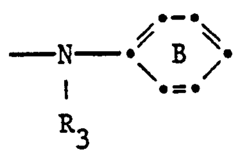

(5)

und $R_3$ Wasserstoff oder $C_{1-4}$-Alkyl, das durch Halogen, Cyan, Hydroxy, Carboxy, Sulfo oder Sulfato substituiert sein kann, ist, und der Phenylring B durch Methyl, Methoxy, Aethoxy, Chlor, Hydroxy, Ureido, Acetylamino, Carboxy oder Sulfo substituiert sein kann.

13. Reaktivfarbstoffe gemäss Anspruch 12, worin $R_3$ Wasserstoff ist, und der Benzolring B durch Sulfo oder Methyl substituiert sein kann.

14. Reaktivfarbstoffe gemäss Anspruch 13, worin Z 2-Methyl-5-sulfophenylamino oder 2,5-Disulfophenylamino ist.

15. Reaktivfarbstoff gemäss Anspruch 14, der Formel

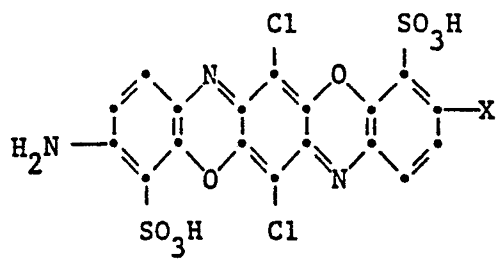

(6)

worin X ein Rest der Formel

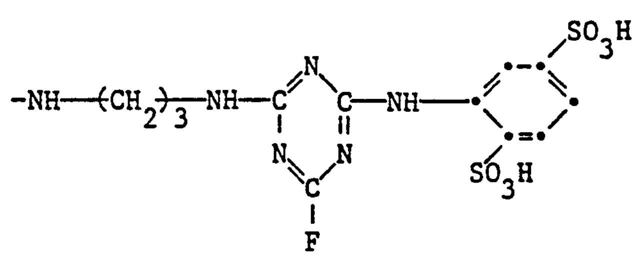

(7)

ist.

16. Verfahren zur Herstellung von Reaktivfarbstoffen gemäss Anspruch 1, dadurch gekennzeichnet, dass man Dioxazinverbindungen der Formel

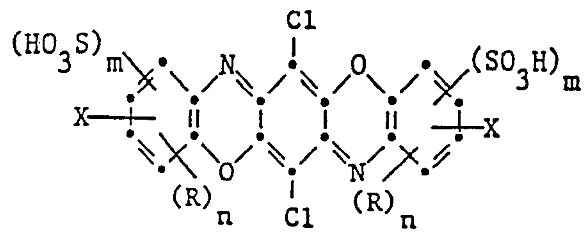

(1)

worin R, n und m die in Anspruch 1 angegebenen Bedeutungen haben, ein X eine $H_2N$-Gruppe und das andere X ein Rest der Formel

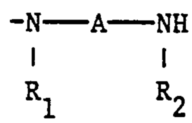

(8)

ist, mit einer Reaktivkomponente der Formel

Halogen-Y (9)

kondensiert.

17. Verfahren gemäss Anspruch 16, zur Herstellung des Reaktivfarbstoffes gemäss Anspruch 15, dadurch gekennzeichnet, dass man eine Dioxazinverbindung der Formel

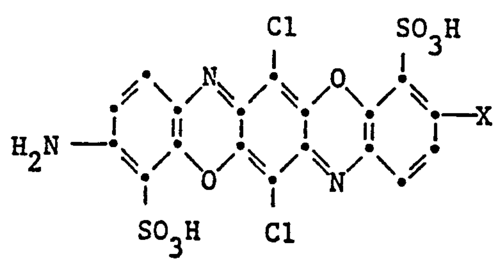

(6)

worin X ein Rest der Formel

$$-NH-(CH_2)_3-NH_2 \quad (10)$$

ist, mit der durch Monokondensation von 2,4,6-Trifluor-s-triazin und Anilin-2,5-disulfonsäure erhaltenen Verbindung der Formel

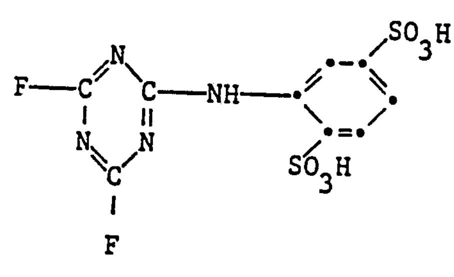

(11)

kondensiert.

18. Verwendung der Reaktivfarbstoffe gemäss den Ansprüchen 1 bis 15, bzw. der gemäss den Ansprüchen 16 und 17 erhältlichen Reaktivfarbstoffen zum Färben und Bedrucken.

19. Verwendung gemäss Anspruch 18, zum Färben von Cellulosefasern.

**Revendications**

1. Colorants réactifs de formule:

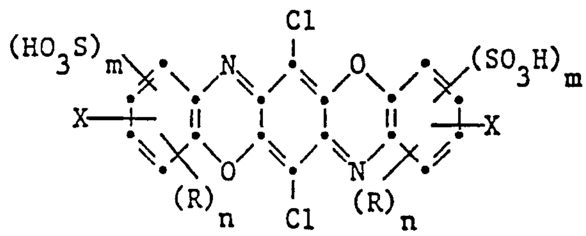

(1)

dans laquelle $(R)_n$ représente n substituants R qui, indépendamment l'un de l'autre, peuvent être alkyle en $C_{1-4}$, alcoxy en $C_{1-4}$, halogène, carboxy, carbamoyle, N-(alkyl en $C_{1-4}$)carbamoyle, N,N-di(alkyl en $C_{1-4}$)carbamoyle, (alkyl en $C_{1-4}$)sulfonyle, sulfamoyle, N-(alkyl en $C_{1-4}$)sulfamoyle ou N,N-di(alkyl en $C_{1-4}$)sulfamoyle, $n = 0$ à 2, $m = 1$ à 2, un X est un groupe $NH_2$ et l'autre X est un reste de formule:

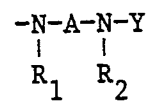

(2)

dans laquelle $R_1$ et $R_2$ représentent, indépendamment l'un de l'autre, hydrogène ou alkyle en $C_{1-4}$ éventuellement substitué, A représente alkylène en $C_{2-4}$, qui peut être substitué par halogène, hydroxy, carboxy, sulfo, phényle, sulfophényle ou (alcoxy en $C_{1-4}$)carbonyle, ou cyclohexylène, qui peut être substitué par alkyle en $C_{1-4}$, ou dans laquelle le groupe $-N(R_1)-A-N(R_2)-$ est 1,4-pipérazinediyle, et Y représente un reste réactif.

2. Colorants réactifs selon la revendication 1, pour lesquels $n = 0$.

3. Colorants réactifs selon la revendication 1 ou 2, pour lesquels $m = 1$.

4. Colorants réactifs selon les revendications 1, 2 et 3, de formule:

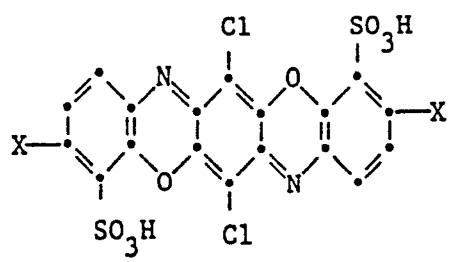

(3)

dans laquelle X a la signification indiquée dans la revendication 1.

5. Colorants réactifs selon l'une des revendications 1 à 4, pour lesquels $R_1$ et $R_2$ sont hydrogène.

6. Colorants réactifs selon l'une des revendications 1 à 5, pour lesquels A est propylène, qui peut être substitué par chlore, hydroxy, méthyle ou phényle.

7. Colorants réactifs selon la revendication 6, pour lesquels A est 1,2-propylène, 1,3-propylène, 2-hydroxy-1,3-propylène, 1-phényl-1,3-propylène, 2-phényl-1,3-propylène, 2-(4'-sulfophényl)-1,3-propylène ou 2-méthyl-1,3-propylène.

8. Colorants réactifs selon la revendication 7, pour lesquels A est 1,2-propylène, 1,3-propylène ou 2-méthyl-1,3-propylène.

9. Colorants réactifs selon la revendication 8, pour lesquels A est 1,3-propylène.

10. Colorants réactifs selon l'une des revendications 1 à 9, pour lesquels un X est un reste de formule:

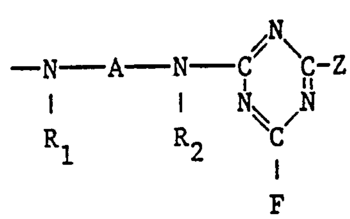

(4)

et Z est un groupe $NH_2$ ou un groupe amino substitué.

11. Colorants réactifs selon la revendication 10, pour lesquels Z est $NH_2$, (alkyl en $C_{1-4}$)amino, qui peut être substitué par hydroxy ou sulfo, N,N-di(alkyl en $C_{1-4}$)amino, qui peut être substitué par hydroxy, phénylamino, qui peut être substitué par alkyle en $C_{1-4}$, alcoxy en $C_{1-4}$, halogène, hydroxy, uréido, acétylamino, carboxy, sulfo ou sulfométhyle, N-(alkyl en $C_{1-4}$)-N-phénylamino, sulfonaphtylamino ou morpholino.

12. Colorants réactifs selon la revendication 11, pour lesquels Z est un reste de formule:

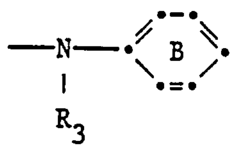

(5)

$R_3$ est hydrogène ou un alkyle en $C_{1-4}$, qui peut être substitué par halogène, cyano, hydroxy, carboxy, sulfo ou sulfato, et le noyau phényle B peut être substitué par méthyle, méthoxy, éthoxy, chlore, hydroxy, uréido, acétylamino, carboxy ou sulfo.

13. Colorants réactifs selon la revendication 12, pour lesquels $R_3$ est hydrogène et le noyau benzénique B peut être substitué par sulfo ou méthyle.

14. Colorants réactifs selon la revendication 13, pour lesquels Z est 2-méthyl-5-sulfophénylamino ou 2,5-disulfophénylamino.

15. Colorants réactifs selon la revendication 14, de formule:

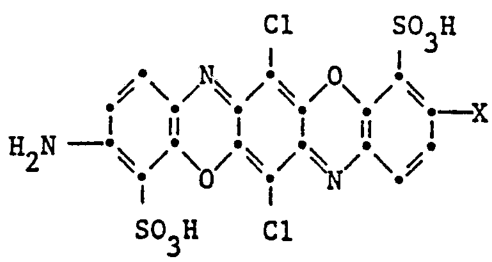

(6)

dans laquelle X est un reste de formule:

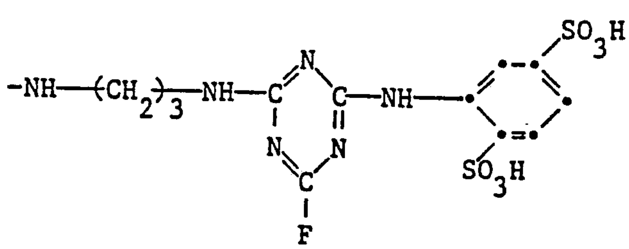

(7)

16. Procédé de préparation des colorants réactifs selon la revendication 1, caractérisé en ce que l'on condense des composés dioxazine de formule:

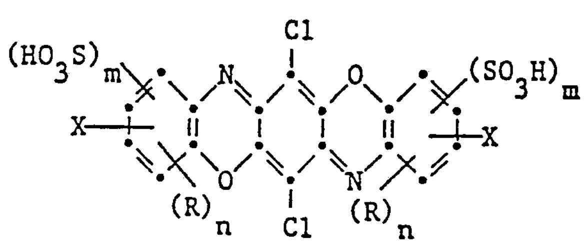

(1)

dans laquelle R, n et m ont les significations indiquées dans la revendication 1, un X est un groupe $NH_2$ et l'autre X est un reste de formule:

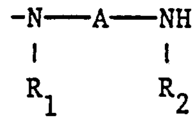

(8)

avec un constituant réactif de formule:

halogène-Y (9)

17. Procédé selon la revendication 16, pour la préparation du colorant réactif selon la revendication 15, caractérisé en ce que l'on condense un composé dioxazine de formule:

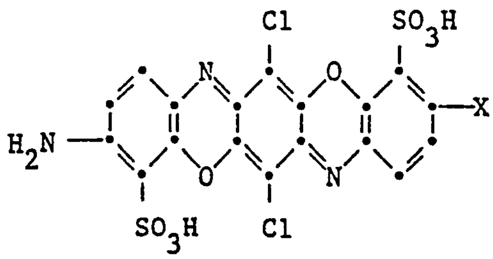

(6)

dans laquelle X est un reste de formule:

$$-NH-(-CH_2-)_3-NH_2 \quad (10)$$

avec le composé obtenu par monocondensation de la 2,4,6-trifluoro-s-triazine et de l'acide aniline-2,5-disulfonique, de formule:

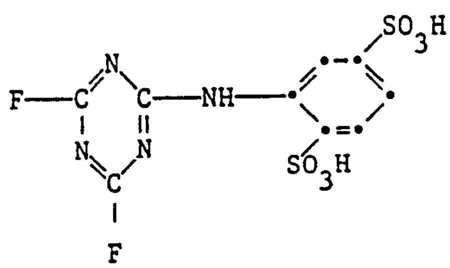

(11)

18. Utilisation des colorants réactifs selon les revendications 1 à 15 ou des colorants réactifs pouvant être obtenus selon les revendications 16 et 17 à la teinture et à l'impression.

19. Utilisation selon la revendication 18, relative à la teinture des fibres de cellulose.

**Claims**

1. A reactive dye of the formula

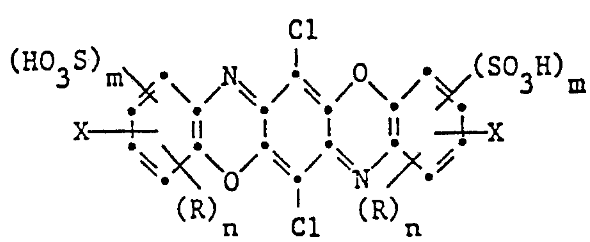

(1)

in which $(R)_n$ stands for n substituents R which, independently of each other, can be $C_{1-4}$alkyl, $C_{1-4}$alkoxy, halogen, carboxyl, carbamoyl, N-$C_{1-4}$-alkylcarbamoyl, N,N-di-$C_{1-4}$alkylcarbamoyl, $C_{1-4}$alkylsulfonyl,

sulfamoyl, N-$C_{1-4}$alkylsulfamoyl or N,N-di-$C_{1-4}$alkylsulfamoyl, n is 0 to 2, m is 1 to 2, one X is an $H_2N$ group and the other X is a radical of the formula

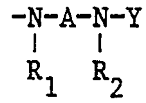

(2)

in which $R_1$ and $R_2$ are independently of each other hydrogen or substituted or unsubstituted $C_{1-4}$alkyl, A is $C_{2-4}$alkylene which can be substituted by halogen, hydroxyl, carboxyl, sulfo, phenyl, sulfophenyl or $C_{1-4}$alkoxycarbonyl, or is cyclohexylene which can be substituted by $C_{1-4}$alkyl, or in which the group —$N(R_1)$—A—$N(R_2)$— is 1,4-piperazinediyl, and Y is a reactive radical.

2. A reactive dye according to claim 1, in which n is 0.

3. A reactive dye according to either of claims 1 or 2, in which m is 1.

4. A reactive dye according to claims 1, 2 and 3, of the formula

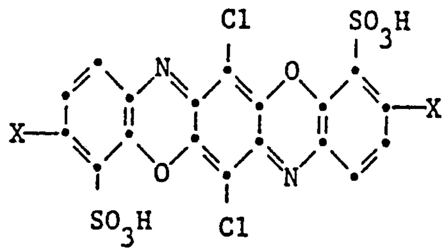

(3)

in which X is as defined in claim 1.

5. A reactive dye according to any one of claims 1 to 4, in which $R_1$ and $R_2$ are hydrogen.

6. A reactive dye according to any one of claims 1 to 5, in which A is propylene which can be substituted by chlorine, hydroxyl, methyl or phenyl.

7. A reactive dye according to claim 6, in which A is 1,2-propylene, 1,3-propylene, 2-hydroxy-1,3-propylene, 1-phenyl-1,3-propylene, 2-phenyl-1,3-propylene, 2-(4′-sulfophenyl)-1,3-propylene or 2-methyl-1,3-propylene.

8. A reactive dye according to claim 7, in which A is 1,2-propylene, 1,3-propylene or 2-methyl-1,3-propylene.

9. A reactive dye according to claim 8, in which A is 1,3-propylene.

10. A reactive dye according to any one of claims 1 to 9, in which one X is a radical of the formula

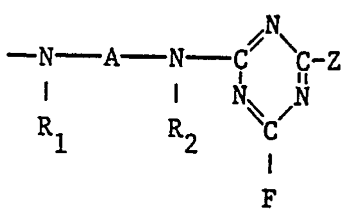

(4)

and Z is —$NH_2$ or a substituted amino group.

11. A reactive dye according to claim 10, in which Z is —$NH_2$, $C_{1-4}$alkylamino which can be substituted by hydroxyl or sulfo, N,N-di-$C_{1-4}$alkylamino which can be substituted by hydroxyl, phenylamino which can be substituted by $C_{1-4}$alkyl, $C_{1-4}$alkoxy, halogen, hydroxyl, ureido, acetylamino, carboxyl, sulfo or sulfomethyl, N-$C_{1-4}$alkyl-N-phenylamino, sulfonaphthylamino or morpholino.

12. A reactive dye according to claim 11, in which Z is a radical of the formula

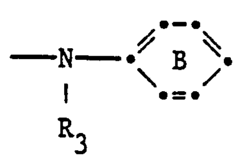

(5)

and $R_3$ is hydrogen or $C_{1-4}$alkyl which can be substituted by halogen, cyano, hydroxyl, carboxyl, sulfo or sulfato, and the phenyl ring B can be substituted by methyl, methoxy, ethoxy, chlorine, hydroxyl, ureido, acetylamino, carboxyl or sulfo.

13. A reactive dye according to claim 12, in which $R_3$ is hydrogen, and the benzene ring B can be substituted by sulfo or methyl.

14. A reactive dye according to claim 13, in which Z is 2-methyl-5-sulfophenylamino or 2,5-disulfophenylamino.

15. A reactive dye according to claim 14, of the formula

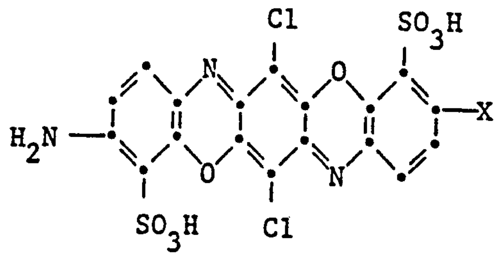

(6)

in which X is a radical of the formula

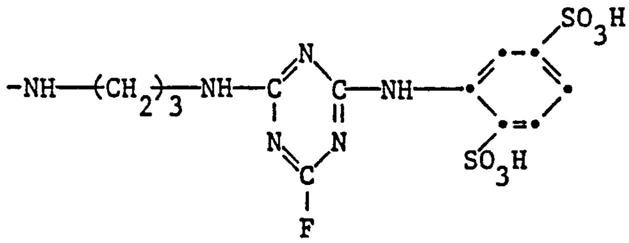

(7)

16. A process for preparing a reactive dye according to claim 1, which comprises condensing a dioxazine compound of the formula

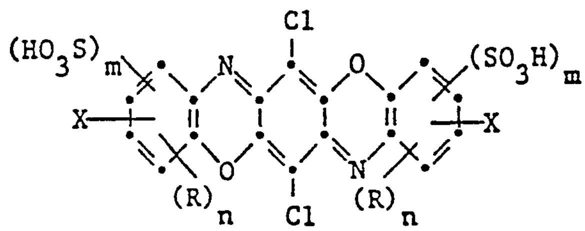

(1)

in which R, n and m are as defined in claim 1, one X is an $H_2N$ group and the other X is a radical of the formula

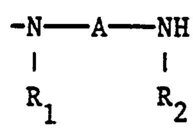

(8)

with a reactive component of the formula

halogen-Y (9)

17. A process according to claim 16, for preparing the reactive dye according to claim 15, which comprises condensing a dioxazine compound of the formula

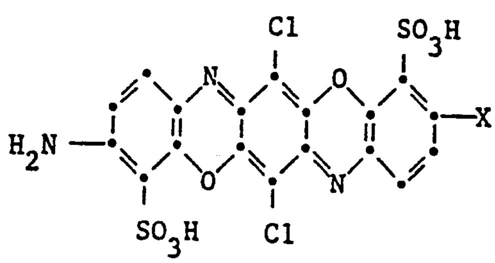

(6)

in which X is a radical of the formula

$$-NH-(CH_2)_3-NH_2 \qquad (10)$$

with the compound obtained by monocondensing 2,4,6-trifluoro-s-triazine with aniline-2,5-disulfonic acid and having the formula

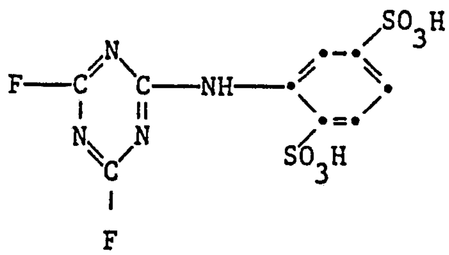

(11)

18. A method of using the reactive dye according to claims 1 to 15, or the reactive dye obtainable according to claims 16 and 17, for dyeing and printing.

19. A method of use according to claim 18, for dyeing cellulose fibres.